# EUROPEAN PATENT APPLICATION

(11) **EP 4 783 429 A1**
(43) Date of publication of application: **29.07.2026**
(21) Application number: 25153817.9
(22) Date of filing: 24.01.2025
(51) Int. Cl.: H02K 7/08, H02K 7/14, H02K 9/12, H02K 9/28, H02K 16/00

(54) **MARINE PROPULSION UNIT**

(71) Applicant: ABB Oy, 00380 Helsinki (FI)
(72) Inventor: SAKKINEN, Petri, 00980 Helsinki (FI); PELJO, Veli-Pekka, 00980 Helsinki (FI); JEHKONEN, Teemu, 00980 Helsinki (FI); KATAINEN, Mikko, 00980 Helsinki (FI)
(74) Representative: Zimmermann & Partner Patentanwälte mbB

(57) **Abstract**

A marine propulsion unit with a slip-ring cooling system and a contra rotating motor having an inner rotor and an outer rotor, comprises a slip-ring housing and a slip-ring assembly arranged within the slip-ring housing, wherein the slip-ring assembly comprises at least one slip-ring element being in contact to the outer rotor. The marine propulsion unit further comprises an air channel arrangement comprising a first position being connected to the slip-ring housing and a second position. An air fan device is configured to generate a cooling airflow that flows from the first position to the second position of the air channel arrangement creating a negative pressure within the slip-ring housing and an outflow filter unit arranged at the second position of the air channel arrangement for filtering the cooling airflow exiting the air channel arrangement.

## Description

### TECHNICAL FIELD

Embodiments of the present disclosure relate to a propulsion unit. Further embodiments relate to a method for cooling a slip-ring arrangement in a marine propulsion unit.

### BACKGROUND

To propel marine vessels, marine propulsion units provide an efficient way to propel marine vessels. Further, azimuthing propulsion units allow for an improved maneuverability of marine vessels. In azimuthing propulsion units, at least one marine propeller attached to a rotatable pod provides thrust. A direction of the thrust may be controlled via a rotation of the rotatable pod. In typical azimuthing propulsion units, at least one electric motor driving the at least one marine propeller is integrated in the pod.

For an efficient marine propulsion unit, contra rotating propellers may be employed. For driving a contra rotating propeller, a contra rotating electric motor can be suitable that employs slip-rings. However, it is required that the slip-rings operate reliably and with a seldom need for maintenance.

### DISCLOSURE OF THE INVENTION

In the view of the foregoing, the present disclosure is directed to a marine propulsion unit and a method for cooling a slip-ring arrangement in the marine propulsion unit.

According to an aspect of the present disclosure, a marine propulsion unit with a slip-ring cooling system and a contra rotating motor having an inner rotor and an outer rotor is provided. The marine propulsion unit comprises a slip-ring housing and a slip-ring assembly arranged within the slip-ring housing, wherein the slip-ring assembly comprises at least one slip-ring element being in contact to the outer rotor. Furthermore, an air channel arrangement is provided which comprises a first position being connected to the slip-ring housing and a second position. The marine propulsion unit further comprises an air fan device configured to generate a cooling airflow that flows from the first position to the second position of the air channel arrangement creating a negative pressure within the slip-ring housing. The marine propulsion unit further includes an outflow filter unit arranged at the second position of the air channel arrangement for filtering the cooling airflow exiting the air channel arrangement.

According to another aspect of the present disclosure, a marine vessel comprising a marine propulsion unit according to any of the embodiments described herein is provided.

According to another aspect of the present disclosure, a method for cooling a slip-ring arrangement in a marine propulsion unit with a contra rotating motor having an inner rotor and an outer rotor is provided. The method for cooling a slip-ring arrangement includes cooling a slip-ring assembly within a slip-ring housing by generating a negative pressure in an air channel arrangement connected by a first position to the slip-ring housing, wherein a cooling airflow flows from the first position to a second position of the air channel arrangement. The method further includes filtering the cooling airflow exiting the second position of the air channel arrangement by an outflow filter unit.

According to some embodiments, the azimuthing propulsion unit is configured to propel a marine vessel. In particular, the marine vessel may comprise at least one azimuthing propulsion unit according to embodiments described herein. The marine vessel as described herein comprises seagoing or inland marine vessels. In particular, the marine vessel comprises ships and boats. In some embodiments, the marine vessel comprises merchant ships, in particular for transporting goods. In particular, the marine vessel may comprise a container vessel, a Ro-Ro or car carrier, a tanker or shuttle tanker, a liquid natural gas (LNG) carrier or a floating storage and regasification unit. In some embodiments, the marine vessel comprises ferries, in particular single- and double-ended ferries, cruise ships, water buses, yachts. In some embodiments, the marine vessel comprises offshore energy vessels, in particular service operation vessels (SOVs), cable laying vessels (CLVs), foundation installation vessels (FIVs), offshore construction (OCVs) and support vessels (OSVs), platform supply vessels (PSVs), and anchor-handling tug supply vessels (AHTS). In some embodiments, the marine vessel comprises research and survey vessels or other special purpose vessels, such as dredgers, heavy lift vessels or towboats. In some embodiments, the marine vessel comprises ice-going marine vessels, in particular icebreakers. In some embodiments, the marine vessel may comprise navy or coast guard vessels.

The marine vessel typically comprises a hull. The pod of the azimuthing propulsion unit is attached to the hull of the marine vessel, in particular at the bottom of the hull. Typically, the hull defines a vessel interior and a vessel exterior. Space confined by the hull and configured to be isolated from sea water may be defined as the vessel interior. Space outside the hull, and in particular the sea, may be defined as the vessel exterior. Typically, the vessel interior is substantially free of sea water and substantially dry.

In some embodiments, the marine vessel may comprise a plurality of azimuthing propulsion units. In particular, the marine vessel may comprise 2, 3, 4, or more azimuthing propulsion units. Typically, each of the plurality of azimuthing propulsion units may be controlled separately. In some embodiments, the marine vessel may comprise a single azimuthing propulsion unit with a single pod. In some embodiments, at least one azimuthing propulsion unit may be combined with one or more further marine propulsion unit on a single marine vessel.

Typically, the azimuthing propulsion unit comprises a pod with a pod hull. The pod is configured to be rotatably attached to the hull of the marine vessel, particularly at the bottom of the hull of the marine vessel. The pod may be rotated about a substantially vertical rotation axis of the azimuthing propulsion unit. In particular, the pod may be rotated by at least 270°, at least 315° or at least 360° about the substantially vertical rotation axis of the azimuthing propulsion unit. In typical embodiments, the rotation of the pod about the substantially vertical rotation axis of the azimuthing propulsion unit is not restricted, in particular not mechanically restricted.

Typically, the pod comprises a hull cap at a first end of the pod and a propeller unit, in particular a pushing or pulling propeller unit, attached to a second end of the pod. The first end of the pod may also be described as non-driving end, NDE, and the second end of the pod may also be described as driving end, DE, of the pod. The propeller unit typically rotates about a rotation axis of the propeller unit. The rotation axis of the propeller unit may be substantially perpendicular to the vertical rotation axis of the azimuthing propulsion unit.

In typical embodiments, the propeller unit comprises an outer shaft propeller and an inner shaft propeller. Typically, the outer shaft propeller is arranged closer to the hull than the inner shaft propeller. In a pushing propeller unit, the outer shaft propeller may also be described as front propeller and the inner shaft propeller may be described as the rear propeller; and vice versa for a pulling propeller unit. In particular, the outer shaft propeller is arranged closer to the vertical rotation axis than the inner shaft propeller. Typically, the outer shaft propeller and the inner shaft propeller are arranged adjacent to each other. The outer shaft propeller and the inner shaft propeller rotate about the rotation axis of the propeller unit.

Typically, the propeller unit comprises a contra rotating propeller unit. In particular, the outer shaft propeller may be configured to rotate in a first direction, particularly about the rotation axis of the propeller unit, and the inner shaft propeller may be configured to rotate in a second direction opposite to the first direction, particularly about the rotation axis of the propeller unit. In other words, the outer shaft propeller may rotate clockwise and the inner shaft propeller may rotate counterclockwise, or vice versa, about the same rotation axis. A contra rotating propeller unit may advantageously allow for a higher hydrodynamic efficiency than other propeller concepts, in particular with respect to single propellers.

In some embodiments, the outer shaft propeller has a first diameter and the inner shaft propeller has a second diameter with the second diameter being different from the first diameter, particularly the first diameter being larger than the second diameter. Typically, the outer shaft propeller comprises a first number of first blades and the inner shaft propeller comprises a second number of second blades. Typically, the second number may be different from the first number. The outer shaft propeller may comprise 3, 4, 5, 6 or 8 first blades. The inner shaft propeller may comprise 3, 4, 5, 6 or 8 second blades. In some embodiments, the outer shaft propeller comprises one more first blade than the inner shaft propeller comprises second blades. Exemplarily, the outer shaft propeller comprises 6 first blades and the inner shaft propeller comprises 5 second blades. In some embodiments, the outer shaft propeller and the inner shaft propeller may comprise the same number of blades, in particular 3, 4, 5, 6 or 8 first and second blades, respectively. The outer shaft propeller and/or the inner shaft propeller may each be manufactured as a monoblock or in components, as a built-up propeller.

Typically, the propeller unit is driven by an electric motor. Typically, the electric motor has a power of at least 100 kW, at least 1 MW, at least 2 MW, at least 5 MW, at least 10 MW or at least 15 MW. The electric motor is typically arranged within the pod. Particularly, the electric motor is mechanically connected to the propeller gearlessly. Typically, a rotation axis of the electric motor is identical to a rotation axis of the propeller unit. In particular, an output shaft of the electric motor may be identical to the drive shaft of the propeller unit or may be gearlessly connected to a drive shaft of the propeller unit. The output shaft of the electric motor typically is coaxial to the drive shaft of the propeller unit. In typical embodiments, for a propeller unit comprising an outer shaft propeller and an inner shaft propeller, in particular for the contra rotating propeller unit, the outer shaft propeller and the inner shaft propeller may be driven by the same electric motor.

The electric motor typically comprises a contra rotating electric motor. In particular, the contra rotating electric motor comprises a dual rotor electric motor with an outer rotor and an inner rotor configured to rotate in opposite directions about a rotation axis of the electric motor. Typically, the rotation axis of the electric motor may be coaxially with the rotation axis of the propeller unit. Typically, the electric motor is a synchronous electric motor. Typically, the outer rotor comprises windings to be supplied with an electric current for the operation of the electric motor. The inner rotor may be a permanent magnet rotor or an externally excited synchronous rotor.

In some embodiments, the drive shaft of the propeller comprises an outer shaft and an inner shaft. Outer shaft and inner shaft are typically coaxially arranged. Typically, the outer rotor drives the outer shaft. The outer shaft is typically mechanically connected to the outer shaft propeller gearlessly. Typically, the inner rotor drives the inner shaft. The inner shaft is typically mechanically connected to the inner shaft propeller gearlessly. Typically, the inner shaft is arranged inside the outer shaft; in other words, an inside radius of the outer shaft exceeds an outside radius of the inner shaft. The inner shaft and the outer shaft rotate about the same rotation axis, and in particular about the rotation axis of the electric motor. Typically, the inner shaft is supported in the pod by a drive end, DE, inner bearing and a non-drive end, NDE, inner bearing. Typically, the outer shaft is supported in the pod by a drive end, DE, outer bearing and a non-drive end, NDE, outer bearing. The NDE inner bearing and/or the NDE outer bearing may each comprise an axial bearing and a radial bearing, particularly within the same bearing housing. Employing a contra rotating electric motor may advantageously allow to drive the contra rotating propeller with a single electric motor gearlessly. Thereby, a more compact and efficient drive train may be provided.

In some embodiment, the marine propulsion unit comprises a slip-ring cooling system for cooling a slip-ring unit, particularly for cooling a slip-ring arrangement. The slip-ring cooling system includes a slip-ring housing and a slip-ring assembly arranged within the housing. Typically, the slip-ring assembly comprises at least one slip-ring element which is in contact to the outer rotor. Furthermore, an air channel arrangement is provided, which includes a first position being connected to the slip-ring housing and a second position. An air fan device is provided which is configured to generate a cooling airflow that flows from the first position to the second position of the air channel arrangement creating a negative pressure within the slip-ring housing. Furthermore, an outflow filter unit is included which is arranged at the second position of the air channel arrangement for filtering the cooling airflow exiting the air channel arrangement.

Typically, the slip-ring housing can be understood as a casing which is configured to accommodate the slip-ring assembly separately in the pod. The slip-ring housing is configured to prevent dust, in particular carbon dust to enter the interior of the pod. Typically, a slip-ring element includes a sliding contact, in particular brushing means fixed in the slip-ring housing which are configured to transfer electrical power, signal or data to a corresponding slip-ring arranged on the outer surface of the outer rotor by contacting the corresponding slip-ring element. It can also be understood, that the corresponding slip-ring may arranged on the outer shaft of the outer rotor. The air channel arrangement can be, for example, understood as a continuous air channel in which air can flow from the first position to the second position in a closed setting. In particular, the air channel arrangement is typically airtight in between the first position and the second position. In other words, the air channel arrangement is configured to enable air flowing between the first end and the second end of the air channel arrangement without mixing with surrounding air of the contra rotating motor.

The air fan device, for example, can be arranged near the second position outside of the air channel arrangement. The air fan device may be configured to draw in air from the second position of the air channel arrangement thereby generating the cooling airflow. Furthermore, the air fan device can also be arranged within the air channel arrangement to blow out air towards the second position of the air channel arrangement. In particular, the air fan device can also include one or more air fan elements which are arranged outside and/or inside of the air channel arrangement and are configured to generate the cooling airflow. It can also be understood that, the air fan device is configured to generate a pressure difference between the slip-ring housing and the outer environment of the slip-ring housing by generating the cooling air flow. The term "creating negative pressure within the slip-ring housing" could also be interpreted as creating a vacuum within or inside the slip-ring housing.

Typically, the outflow filter unit is an air filter configured to filter out dirt particles from the cooling airflow exiting the air channel arrangement. The outflow filter unit can include, for example, a dust filter, a particle filter, a soot filter or similar air filters. Typically, the outflow filter unit is configured to filter the entire cooling air flow before it exits the second position of the air channel. In other words, the outflow filter unit is configured to completely cover the second position of the air channel arrangement. The outflow filter unit may be a replaceable outflow filter unit. A replaceable outflow filter unit can be understood as an outflow filter unit which is detachably arranged at the second position of the air channel arrangement. Furthermore, the outflow filter unit may be freely accessible from the interior of the pod to be replaceable.

In some embodiments, the cooling airflow is part of a motor cooling airflow of a motor cooling system before the cooling airflow enters the slip-ring housing. The cooling airflow maybe be merged with the motor cooling airflow before entering the slip-ring housing. It can also be understood, that the cooling airflow is diverted from the motor cooling airflow by entering the slip-ring housing. Thereby no separate cooling airflow upstream of the slip-ring housing is required, which simplifies the operation of the slip-ring cooling system by allowing the use of components that are already provided for the motor cooling airflow. Typically, at least 1%, at least 2%, at least 5% or at least 10% of the motor cooling airflow is entering the slip-ring housing.

In some embodiments, the cooling airflow is part of a motor cooling system after the cooling airflow exits the second position of the air channel arrangement. The cooling airflow maybe be merged with the motor cooling airflow after exiting the second position of the air channel arrangement, in particular after exiting the outflow filter unit. It can also be understood, that the cooling airflow is merged with the motor cooling airflow downstream of the second position of the air channel arrangement. Thereby no separate cooling airflow downstream of the second position of the air channel arrangement is required, which also simplifies the operation of the slip-ring cooling system by allowing the use of components, like heat exchangers or further filter means, that are already provided for the motor cooling airflow.

In some embodiments, the marine propulsion unit further includes an inflow filter unit at the slip-ring housing for the slip-ring assembly. The inflow filter unit is configured to filter air entering the slip-ring housing. The inflow filter unit maybe integrated in the slip-ring housing. The inflow filter unit may also be arranged at an opening in the slip-ring housing. According to embodiments more than one inflow filters units can be provided. Typically, the inflow filter unit is an air filter configured to filter out dirt particles from a motor cooling airflow entering the slip-ring housing. The inflow filter unit can include, for example, a dust filter, a particle filter, a soot filter or similar air filters. Typically, the inflow filter unit is configured to filter the most of the air entering the slip-ring housing. In other words, the inflow filter unit can be configured to filter at least 85%, at least 90%, at least 95% or at least 99% of the air entering the slip-ring housing. According to embodiments the inflow filter unit can be configured to filter all air entering the slip-ring houses. The inflow filter unit can be a replaceable inflow filter unit. A replaceable inflow filter unit can be understood as an inflow filter unit which is detachably arranged at the slip-ring housing. Furthermore, the inflow filter unit may be freely accessible from the outside and/or the inside of the slip-ring housing in order to be easily replaceable.

In some embodiments, the marine propulsion unit includes a set of seals at both ends of the slip-ring assembly at the slip-ring housing and the outer rotor to seal the slip-ring housing against the outside. In particular, the set of seals are configured to seal the slip-ring housing in an area between the slip-ring housing and an outer surface of the outer rotor. The area between the slip-ring housing and the outer surface of the outer rotor can also be understood as the outer rotor shaft interface. Typically, the set of seals are configured to seal the slip-ring housing in an area between the slip-ring housing and the outer shaft of the outer rotor. According to embodiments, at least two seals in a row are provided at one corresponding end of the slip-ring assembly. It could also be understood that the set of seals separating the air inside the slip-ring housing from the air outside the slipring housing. The seals can be configured as shaft seals arranged at the slip-ring housing, which are pressed against the outer surface of the outer rotor to enable sealing. In particular, the shaft seals can be pressed against the outer surface of the outer shaft of the outer rotor. The set of seals can prevent the dust generated by the at last one slip-ring element, when the contra rotating motor is in operation, to exit the slip-ring housing. Furthermore, the set of seals are configured to be accessible from inside the slip-ring housing and/or from outside the slip-ring housing within the pod.

In some embodiments, the set of seals includes at least one lip seal and/or a least one labyrinth seal. Typically, the at least one lip seal can be configured as a soft seal, lip-type seal, strut seals, hydraulic seals or radial shaft seals, for example. Typically, the at least one labyrinth seal can be configured as a smooth-slot labyrinth seal. According to embodiment, the at least one labyrinth seal includes one or more seal chambers. According to embodiments, at least two lip seals in a row are provided at one corresponding end of the slip-ring assembly. According to embodiments, at least one of the two lip seals in a row is arranged in an opposite alignment the other one of the at least two lip seals to further improve the sealing effect. Providing at least one labyrinth seal has the advantage that there is reduced wear in the sealing which improves the sealing effect for the slip-ring housing and reduces the need for replacement.

In some embodiments, an air barrier is provided by instrumentation air within at least one seal. The instrumentation air may be used to pressurize the at least one seal to create an air barrier inside the at least one seal. The instrumentation air can be, for example, supplied by a compressed air reservoir near the slip-ring housing The instrumentation air can also be fed through a compressed air piping from the vessel to the slip-ring housing. Instrumentation air can include any gaseous substance like, normal air or inert gas like noble gas or gaseous nitrogen. Typically, instrumentation air can be supplied by compressed air which is free from contaminates such as moisture and particulates. Typically, instrumentation air can be understood as filtered air. Providing an air barrier, in particular a pressurized air barrier within at least one seal can further enhance the sealing effect of the at least one seal. According to embodiments, an air barrier can be provided in all seals at the slip-ring housing by instrumentation air.

In some embodiments, the slip-ring housing includes a top part accommodating the slip-ring arrangement and a bottom part which is connected to the first position of the air channel arrangement. The top part is situated at a higher altitude as the bottom part. In other words, the bottom part of the slip-ring housing is arranged below the outer rotor, wherein the top part is arranged above the outer rotor, in particular above the outer shaft of the outer rotor. The dust or debris generated by the slip-ring assembly tend to fall down in the bottom part of the slip-ring housing by gravity and by the cooling airflow, since the first position of the air channel arrangement is connected to the bottom part of the slip-ring housing. Furthermore, the dust or debris tends also to move downwards, since the cooling airflow flows from the top part to the bottom part of the slip ring housing. According to some embodiments, the bottom part of the slip ring housing can be larger than the top part of the slip ring housing. Typically, the ratio of the top part to the bottom part by volume-% can be at least 40%, or at least, 30%, or at least 20% or lower. The bottom part being larger than the top part can facilitate the cleaning of the dust and debris accumulating inside the bottom part, for example, by a cleaning device and/or by a personal.

In some embodiments, the bottom part of the slip-ring housing includes dust collecting means. Dust collecting means can include, for example, pockets, collection containers, mesh structures or similar. Providing collecting means at the bottom part of the slip-ring housing can make the cleaning process easier. Furthermore, it might prevent the majority of the dust to enter the air channel arrangement through the first position of the air channel arrangement.

In some embodiments, the air channel arrangement runs, at least in sections, along the longitudinal axis of the outer rotor, and/or wherein the air channel arrangement runs, at least in sections, around the circumference of the outer rotor. This allows a compact and space saving design for the air channel arrangement in the pod. According to some embodiments, parts of the air channel arrangement can be arranged within the motor cooling system along the longitudinal axis of the outer rotor. According to some embodiments, parts of the air channel arrangement can be arranged within the motor cooling system around the circumference of the outer rotor. Typically, the longitudinal axis can also be regarded as rotation axis of the electrical motor.

In some embodiments, the air fan device is part of a motor cooling system. It allows to provide just one air fan device to operate both the motor cooling system and the slip-ring cooling system. According to embodiments, the air fan device of the motor cooling system can be arranged near the second position outside of the air channel arrangement. It can also be understood, that the air fan device is configured to propel air of the motor cooling system and of the cooling airflow simultaneously, e. g. by suction.

In some embodiments, the first position of the air channel arrangement is situated at a lower altitude than the second position of the air channel arrangement. Thus, dust particle rather tends to accumulate near the first position of the air channel arrangement due to gravity. This can also reduce the filter load of the outflow filter unit at the second position which can increase the cleaning intervals and thus ensures more reliable operation of the outflow filter unit. According to embodiments, the vertical distance between the first position and the second position can be at least 2m, or at least 3m, or at least 5m or more than 7m.

The marine propulsions units described herein, and particularly the azimuthing propulsion units described herein, may be employed in a marine vessel. In particular, the marine vessel may comprise at least one marine propulsion unit according to embodiments described herein. Propelling a marine vessel using a marine propulsion unit according to embodiments described herein may improve maneuverability and efficiency of the marine vessel.

The method for cooling a slip-ring arrangement in a marine propulsion unit with a contra rotating motor having an inner rotor and an outer rotor is provided. The method includes cooling a slip-ring assembly within a slip-ring housing by generating a negative pressure in an air channel arrangement which is connected by a first position to the slip-ring housing, wherein a cooling airflow flows from the first position to a second position of the air channel arrangement. The method for cooling a slip-ring arrangement further includes filtering the cooling airflow exiting the second position of the air channel arrangement by an outflow filter unit.

According to some embodiments, the method for cooling the slip-ring arrangement further includes filtering the cooling airflow which enters the slip-ring housing by an inflow filter.

Embodiment of the present disclosure provide a marine propulsion unit, particularly azimuthing propulsion unit, with an improved slip-ring cooling system for cooling the slip-ring assembly in the slip-ring housing. In particular, the cooling airflow in the air channel arrangement is able to either cool the slip-ring assembly and to create a negative pressure within the slip-ring housing. This negative pressure ensures that carbon dust generated through friction of the at least one slip-ring element in operation hardly escape the slip-ring housing. Furthermore, the outflow filter unit arranged at the second position of the air channel arrangement can prevent dust, in particular carbon dust, from entering the pod, whereby other components in the pod, like the contra rotating motor for example, can be protected from the dust. Additionally, the cleaning and the replacement of the outflow filter unit can be done from inside of the propulsion system without dry docketing the vessel.

### BRIEF DESCRIPTION OF THE DRAWINGS

The accompanying drawings relate to embodiments of the disclosure and are described in the following:
- FIG 1a: schematically illustrates a marine propulsion unit according to the embodiments described herein;
- FIG 1b: schematically illustrates a marine propulsion unit according to the embodiments described herein;
- FIG 1c: schematically illustrates a marine propulsion unit according to the embodiments described herein;
- FIG 1d: schematically illustrates a marine propulsion unit with a slip-ring cooling system according to embodiments described herein;
- FIG 2: schematically illustrates a marine propulsion unit with an enlarged view of the slip-ring housing;
- FIG. 3: schematically illustrates the dual rotor electric motor in a cross-sectional view with the air channel arrangement;
- FIG 4: schematically illustrates the position of the air channel arrangement along the outer rotor with an enlarged view;
- FIG 5: schematically illustrates a method of cooling a slip-ring arrangement in a marine propulsion unit.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements may be depicted with exaggerated dimensions to improve the comprehensibility of the detailed description of embodiments. In particular, relations of lengths and widths of components shown may be distorted. Further, some elements may be depicted with enlarged dimensions while other elements in the same figure are depicted, relatively, with reduced dimensions.

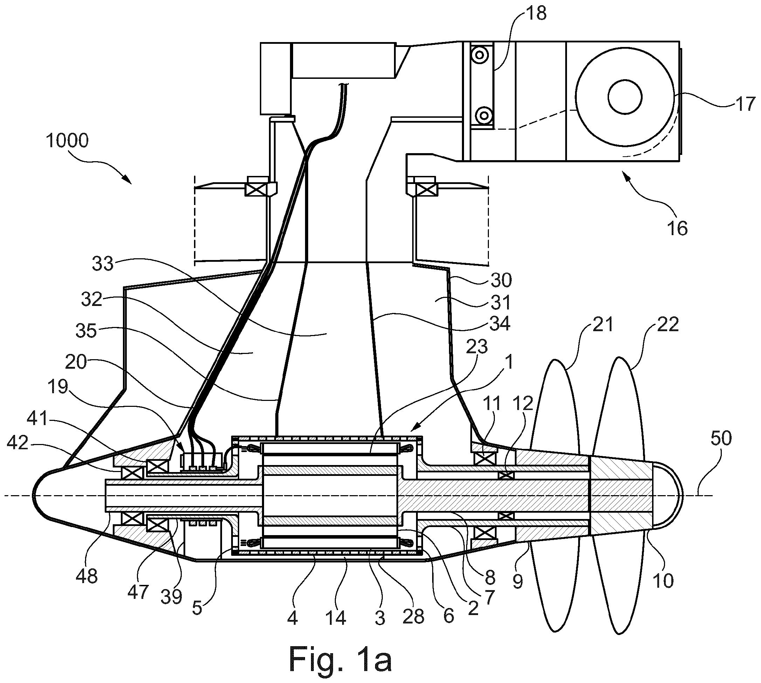

Fig. 1a schematically illustrates a marine propulsion unit 1000 according to typical embodiments described herein. The azimuthing propulsion unit 1000 of Fig. 1a comprises a dual rotor electric motor 1. The dual rotor electric motor 1 may also be described as contra rotating electric motor. The dual rotor electric motor 1 is typically arranged substantially horizontally centrally within the marine propulsion unit 1000. Particularly, the dual rotor electric motor 1 is arranged within a pod of the azimuthing propulsion unit 1000.

The dual rotor electric motor 1 comprises an inner rotor 2 and an outer rotor 3. The inner rotor 2 is arranged within the outer rotor 3. Inner rotor 2 and outer rotor 3 are arranged coaxially with respect to each other. The inner rotor 2 and the outer rotor 3 are configured to rotate about a rotation axis 50. The rotation axis 50 is a longitudinal axis of the azimuthing propulsion unit 1000. The inner rotor 2 drives an inner shaft propeller 10 and the outer rotor 3 drives an outer shaft propeller 9. The outer shaft propeller 9 and the inner shaft propeller 10 are arranged coaxially and rotate about the rotation axis 50. The outer shaft propeller 9 and the inner shaft propeller 10 form a contra rotating propeller unit. In the embodiment of Fig. 1a, the outer shaft propeller 9 and the inner shaft propeller 10 substantially have the same diameter. In embodiments not shown in Fig. 1a the outer shaft propeller 9 may have a diameter different from the diameter of the inner shaft propeller 10. Exemplarily, the outer shaft propeller 9 may have a diameter of at least 6 m, exemplarily of 6.1 m, and the inner shaft propeller 10 may have a diameter of at most 6 m, exemplarily of 5.575 m.

The outer rotor 3 of the dual rotor electric motor 1 typically comprises a perforated tube 4, as shown in the typical embodiment of Fig. 1a. The perforated tube 4 mechanically supports the outer rotor winding and comprises a plurality of openings. The plurality of openings of the perforated tube 4 are configured to pass air from an exterior of the dual rotor electric motor 1 into an interior of the dual rotor electric motor 1, and vice versa. Warm air, particularly heated by the dual rotor electric motor 1, may pass from an air gap 23 between the inner rotor 2 and the outer rotor 3 through the perforated tube to an annular air channel 14.

The perforated tube 4 transmits a torque of the outer rotor 3 to outer rotor end flanges 5, 6. A non-drive end, NDE, outer rotor end flange 5 connects the perforated tube 4 to an NDE outer shaft 47. A drive end, DE, outer rotor end flange 6 connects the perforated tube 4 to a DE outer shaft 7. The DE outer shaft 7 transmits the torque of the outer rotor 3 to the outer shaft propeller 9. The outer shaft propeller 9 comprises a plurality of first blades 21, of which two are visible in Fig. 1a. The inner rotor 2 is connected to an NDE inner shaft 48 and to a DE inner shaft 8. The DE inner 8 shaft transmits the torque of the inner rotor 2 to the inner shaft propeller 10. The inner shaft propeller 10 comprises a plurality of second blades 22, of which two are visible in Fig. 1a. In the embodiment of Fig. 1a, the outer shaft propeller 9 and the inner shaft propeller 10 are arranged in a pulling configuration. In particular, the first blades 21 and the second blades 22 are configured to operate in a pulling mode.

The NDE inner shaft 48 is supported in the pod 30 by an NDE inner bearing 42. The NDE outer shaft 47 is supported in the pod 30 by an NDE outer bearing 41. The NDE outer bearing 41 and the NDE inner bearing 42 typically comprise an oil seal, respectively. The DE outer shaft 7 is supported in the pod 30 by a DE outer bearing 11. The DE inner shaft 7 is supported in the DE outer shaft 8 by a DE inner bearing 12. The DE outer bearing 11 and the DE inner bearing 12 typically comprise an oil and water seal, respectively.

The dual rotor electric motor 1 is provided with electric energy via a slip ring unit 19. The slip ring unit 19 is typically arranged on the non-drive end side of the dual rotor electric motor 1 and particularly to contact the NDE outer shaft 47 as shown in Fig. 1a. The NDE outer shaft 47 and the NDE outer rotor end flange 5 are providing an electrical connection between the slip ring unit 19 to the dual rotor electric motor 1. The slip ring unit 19 comprises at least one sliding contact to transmit electricity from power supply cables 20 to the dual rotor electric motor 1 and particularly to the outer rotor 3 of the dual rotor electric motor 1. From the outer rotor 3, electricity is provided to windings of the dual rotor electric motor 1. The power supply cables 20 provide electrical power from a marine vessel, and particular from a power supply of the marine vessel to the dual rotor electric motor 1 via the slip ring unit 19. The slip ring unit 19 comprises a slip ring unit housing 39. The slip ring unit housing 39 separates the slip ring unit 19 from a further interior of the pod 30 and particularly is configured to prevent dust generated inside the slip ring unit 19, particularly generated by the at least one sliding contact of the slip ring unit 19, to escape to the interior of the pod 30.

Inside the pod 30 of the azimuthing propulsion unit 1000, air is circulated. The azimuthing propulsion unit 1000 comprises a cooling air unit 16. In the embodiment of Fig. 1a, the cooling air unit 16 is arranged within a hull of a marine vessel. In the typical embodiment shown in Fig. 1a, the cooling air unit 16 comprises an air fan 17 to circulate air. The cooling air unit 16 typically comprises a heat exchanger 18. By the heat exchanger 18, warm air entering the heat exchanger 18 from the pod 30 is cooled with heat being at least partially transferred to a cooling agent of the heat exchanger 18. The cooling air unit 16 provides cool air to the dual rotor electric motor 1 via a DE ingoing air channel 31 and an NDE ingoing air channel 32 in the pod 30. The DE ingoing air channel 31 is physically separated from an outgoing air channel 33 by an DE air channel separating wall 34 in Fig. 1a. The NDE ingoing air channel 32 is physically separated from the outgoing air channel 33 by an NDE air channel separating wall 35 in Fig. 1a. Typically, the outgoing air channel 33 substantially extends in the center of the pod 30 and particularly along a vertical central axis of the pod 30. Air passing through the DE ingoing air channel 31 and/or the NDE ingoing air channel 32 passes through openings of the perforated tube 4 and/or the outer rotor end flanges 5, 6 into an interior of the dual rotor electric motor 1. Within the dual rotor electric motor 1, the air may be heated by the dual rotor electric motor 1, in particular when in operation. The air may exit the dual rotor electric motor 1 via openings of the perforated tube 4 towards the annular air channel 14. The annular air channel 14 is connected to the outgoing air channel 33.

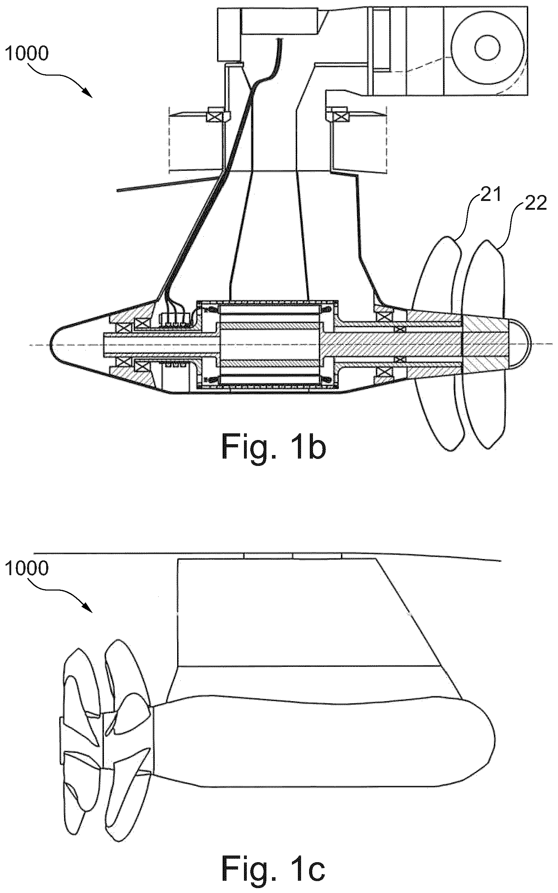

In Fig. 1b, the azimuthing propulsion unit 1000 is configured to operate in a pushing mode. In particular, the first blades 21 and the second blades 22 are configured to operate in a pushing mode. In Fig. 1c, a side view of the azimuthing propulsion unit 1000 of the embodiment of Fig. 1b is schematically shown.

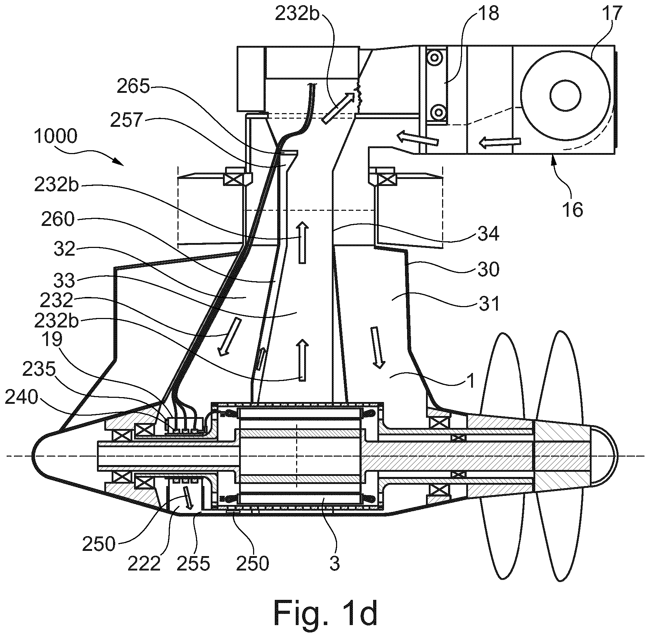

Fig. 1d schematically illustrates a marine propulsion unit 1000 according to typical embodiments described herein. Similar to embodiment of Fig. 1 the marine propulsion unit 1000 comprises the cooling air unit 16. The cooling air unit 16 is arranged within a hull of a marine vessel. In the typical embodiment shown in Fig. 1d, the cooling air unit 16 comprises an air fan 17 to circulate air. The cooling air unit 16 typically comprises a heat exchanger 18. By the heat exchanger 18, warm air entering the heat exchanger 18 from the pod 30 is cooled with heat being at least partially transferred to a cooling agent of the heat exchanger 18. The cooling air unit 16 provides cool air to the dual rotor electric motor 1 via a DE ingoing air channel 31 and an NDE ingoing air channel 32 in the pod 30. The DE ingoing air channel 31 is physically separated from an outgoing air channel 33 by an DE air channel separating wall 34 in Fig. 1d. The NDE ingoing air channel 32 is physically separated from the outgoing air channel 33 by an NDE air channel separating wall 35 (not shown) in Fig. 1d.

A motor cooling airflow 232 which is indicated by the arrow pointing downwards at an angle, flows from the NDE ingoing air channel 32 into the slip-ring housing 19 via an inflow filter unit 235 as shown in Fig. 1d. The inflow filter unit 235 is configured to filter the air of the motor cooling airflow 232 to prevent dirt, or dust, like oil particle, entering the slip-ring housing 19. The air of the cooling airflow 232 entering the slip-ring housing 19 is configured to cool the slip-ring assembly 240 arranged inside the slip-ring housing 19. Upstream of the slip-ring housing 19 the motor cooling airflow 232 is merged with a cooling airflow 250 before the cooling airflow 250 enters the slip-ring housing 19 via the inflow filter unit 235. In other words, the motor cooling airflow 232 includes the cooling airflow 250 upstream of the slip-ring housing 19. The cooling airflow 250 absorbs the heat generated by the slip-ring assembly 240 and flows through a bottom part 222 of the slip-ring housing 19. Furthermore, the cooling airflow 250 generates a negative pressure inside the slip-ring housing 19. The cooling airflow 250 exits the slip-ring housing 19, in particular the bottom part 222 of the slip-ring housing 19 at a first position 255 of an air channel arrangement 260.

The air channel arrangement 260 is separated from the outgoing air channel 33. The air channel arrangement 260 directs the cooling airflow 250 around the dual rotor electric rotor 1, not shown in Fig. 1d. The cooling airflow flows within the air channel arrangement 260 towards a second position 257 of the air channel arrangement 260. At the second position 257 an outflow filter 265 is provided which fully covers the air channel arrangement 260. The cooling airflow 250 which exits the air channel arrangement 260 is filtered by the outflow filter 265 to prevent dust, e. g. carbon dust generated by the slip-ring assembly 240 to enter the pod 30. Typically, the cooling airflow 250 is generated by means of suction which is provided by the air fan 17. According to embodiments, the cooling airflow 250 is merged again, after exiting the outflow filter 265, with the heated motor cooling airflow 232b downstream of the dual rotor electric rotor 1.

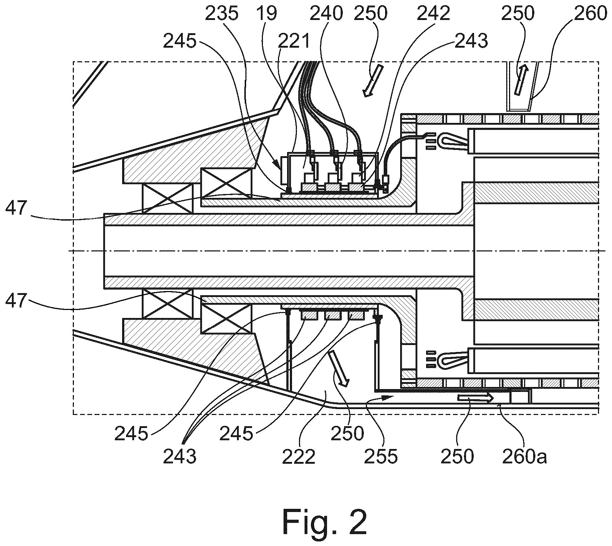

Fig. 2 schematically illustrates a marine propulsion unit with an enlarged view of the slip-ring housing 19. According to embodiments, the slip-ring assembly 240 is accommodated within the slip-ring housing 19. The slip-ring assembly 240 includes 3 slip-ring elements 240a, 240b, 240c. Each slip element 240a, 240b, 240c, includes brushing means 242 which are in contact with a corresponding slip-ring 243 arranged on the outer surface of the outer shaft 47 of the outer rotor 3 for transmitting power to the outer rotor 3. The slip-ring assembly 240 is arranged in a top part 221 of the slip-ring housing 19. Due to abrasion of the brushing means 242 sliding at the slip-rings 243 carbon dust is generated inside the slip ring housing 19. To prevent the carbon dust from escaping the slip-ring housing 19, seals 245 at both end of the slip-ring assembly 240 are provided which seal the air inside the slip-ring housing 19 from the air outside of the slip-ring housing 19. The seals 245 are arranged at the slip-ring housing 19 and are pressed against the outer surface of outer rotor 3 to seal the area between the outer rotor 3 and the slip-ring housing 19. In particular, the seals 245 are pressed against the NDE outer shaft 47 of the outer rotor 3. According to embodiments, the slip-rings 243 can be mounted on a sleeve layer included at the outer surface of the outer shaft 47, wherein the seals 245 are pressed against the sleeve layer of the outer shaft 47 to seal the air within the slip-ring housing 19 from the air outside the slip-ring housing 19.

Furthermore, the carbon dust is prevented from escaping the slip-ring housing 19, since the slip-ring housing 19 is provided with negative pressure generated by the cooling airflow 250. The slip-ring housing 19 includes a bottom part 222 which is arranged below the outer rotor 3. According to embodiments, the bottom part 222 is larger than the top part 221 of the slip-ring housing. Furthermore, due to gravity the carbon dust lower itself down to the bottom part 222 where it can accumulate. Likewise, the carbon dust is carried down to the bottom part 222 by the cooling airflow 250. In particular, larger carbon dust particles tend to remain in the bottom part, wherein lighter carbon dust particles tend to be carried by the cooling airflow 250 out of the bottom part 222 into the air channel arrangement 260. As already described for Fig. 1d, the cooling airflow 250 enters the slip-ring housing 19 by the inflow filter unit 235 and exits the slip-ring housing 19 at the first position 255 of the air channel arrangement 260. A first section 260a connected to the first position 255 of the air channel arrangement 260 runs along the longitudinal axis of the outer rotor 3. A second section, not shown, arranged downstream of the first section 260a runs around the circumference of the outer rotor 3.

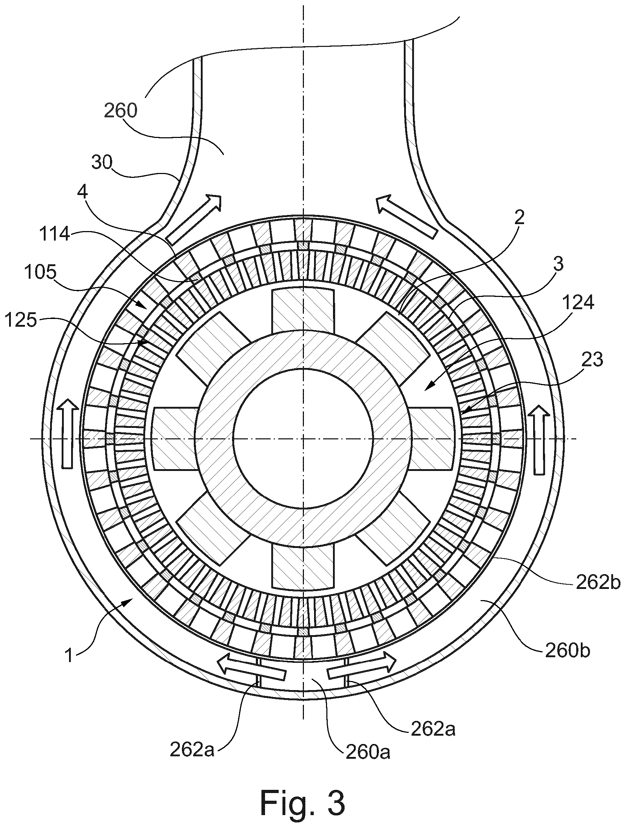

In Fig. 3, the dual rotor electric motor 1 is shown in a cross-sectional view. In Fig. 3, the cross-sectional view along a plane perpendicular to the rotating axis 50 of Fig. 1a at a central position of the dual rotor electric motor 1 is shown. The dual rotor electric motor 1 is arranged within the pod 30 of the marine propulsion system. Between a wall of the pod 30 and the dual rotor electric motor 1, the second section 260b of the air channel arrangement 260 is provided. The first section 260a of the air channel arrangement 260 running along the longitudinal axis of the out rotor is connected to the second section 260b which runs around the circumference of the outer rotor of the air channel arrangement. In other words, the second section 260b of the air channel arrangement 260 is ring-shaped. Furthermore, the second section of 260b runs within the motor cooling system but is separated from it. In other words, the second section 260b is enclosed on both sides along the longitudinal direction by the motor cooling system. Furthermore, the cooling airflow 250 is not merged with the motor cooling airflow in the first section 260a and the second section 260b of the air channel arrangement 260. The first section 260a is separated from motor cooling system by its outer walls 262a. Furthermore, the second section 260b is separated from the motor cooling system by an annular separating wall 262b.

The inner rotor 2 of the dual rotor electric motor 1, having a free space 124 between poles of the inner rotor 2 for air passing along the inner rotor 2, is arranged within the outer rotor 3. Between the inner rotor 2 and the outer rotor 3, an air gap 23 is present. The outer rotor 3 comprises an outer rotor winding installed in an outer rotor core. The outer rotor core comprises cooling air slots 125 arranged in a radial direction to allow air to flow from the inner rotor 2 and the outer rotor winding towards the outgoing air channel 33 (not shown) via the perforated tube 4. The perforated tube 4 is connected with the outer rotor 3 via a plurality of axial beams 114. The perforated tube 4 comprises a plurality of radial openings 104. Particularly, the perforated tube 4 comprises a plurality of first openings connected to the at least one ingoing air channel (not shown in Fig. 3) and a plurality of second openings 105 connected to the outgoing air channel 33 (not shown).

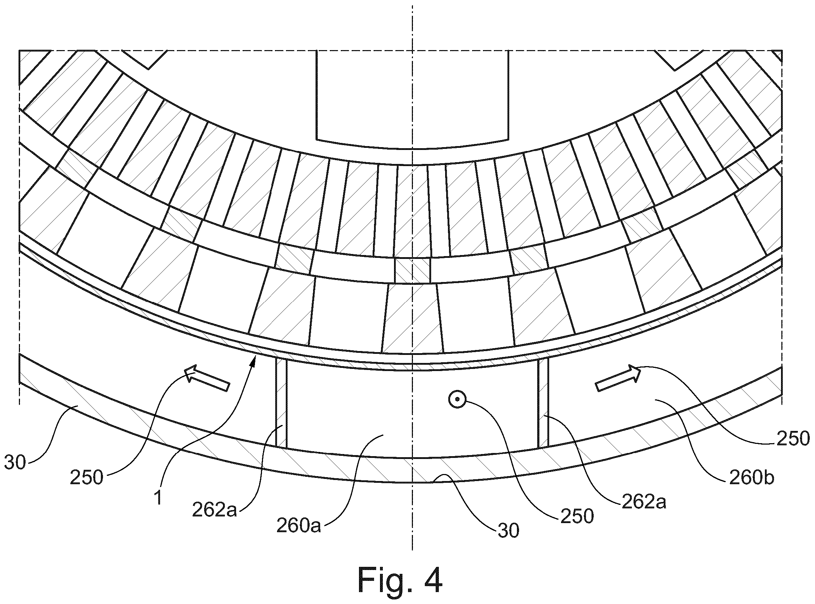

Fig. 4 schematically illustrates the air channel arrangement 260 a long the outer rotor 3 with an enlarged view with respect to Fig. 3. The first section 260a of the air channel arrangement 260 runs between the pod 30 and the dual electric motor 1. The first section 260a runs along the longitudinal axis of the rotor and is connected with the second section 260b of the air channel arrangement 260. The first section 260a runs perpendicular to the second section 260b. In the perspective of Fig. 4 the outer walls 262a can also be considered as the end portions of the first section 260a where the first section 260a leads into the second section 260b of the air channel arrangement 260. Accordingly, the cooling airflow 250 runs a long the longitudinal axis within the first section 260a and is than deflected in a circumferential direction of the outer rotor within the second section 260b.

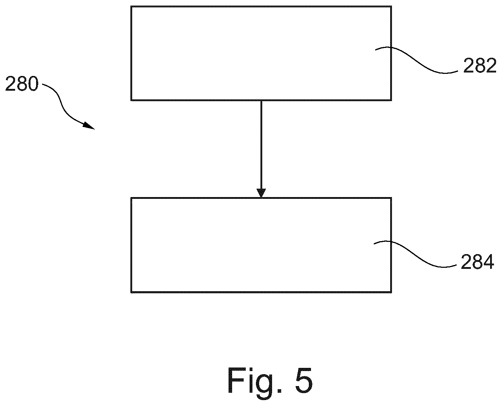

Fig. 5 shows a method 280 for cooling a slip-ring arrangement in a marine propulsion unit with a contra rotating motor having an inner rotor and an outer rotor. The method 280 comprises cooling 282 a slip-ring assembly within a slip-ring housing by generating a negative pressure in an air channel arrangement connected by a first position to the slip-ring housing, wherein a cooling airflow flows from the first position to a second position of the air channel arrangement and filtering 284 the cooling airflow exiting the second position of the air channel arrangement by an outflow filter.

## Claims

1. A marine propulsion unit with a slip-ring cooling system and a contra rotating motor having an inner rotor and an outer rotor, comprising:
a slip-ring housing;
a slip-ring assembly arranged within the slip-ring housing;
wherein the slip-ring assembly comprises at least one slip-ring element being in contact to the outer rotor;
an air channel arrangement comprising a first position being connected to the slip-ring housing and a second position;
an air fan device configured to generate a cooling airflow that flows from the first position to the second position of the air channel arrangement creating a negative pressure within the slip-ring housing; and
an outflow filter unit arranged at the second position of the air channel arrangement for filtering the cooling airflow exiting the air channel arrangement.

2. The marine propulsion unit according to claim 1, wherein the cooling airflow is part of a motor cooling airflow of a motor cooling system before the cooling airflow enters the slip-ring housing.

3. The marine propulsion unit according to claim 1 or 2, wherein
the cooling airflow is part of a motor cooling airflow of a motor cooling system after the cooling airflow exits the second position of the air channel arrangement.

4. The marine propulsion unit according any of claim 1 to 3, further comprising an inflow filter unit at the slip-ring housing of the slip-ring assembly.

5. The marine propulsion unit according to any of claim 1 to 4, further comprising a set of seals at both ends of the slip-ring assembly at the slip-ring housing and the outer rotor, to seal the slip ring housing against the outside.

6. The marine propulsion unit according to claim 5, wherein
the set of seals comprises at least one lip seal and/or at least one labyrinth seal.

7. The marine propulsion unit according to any of claims 5 to 6, wherein an air barrier is provided by instrumentation air within at least one seal.

8. The marine propulsion unit according to any of claims 1 to 7, wherein
the slip-ring housing comprises a top part accommodating the slip-ring arrangement and a bottom part which is connected to first position of the air channel arrangement.

9. The marine propulsion unit according to claim 8, wherein
the bottom part of the slip-ring housing comprises dust collecting means.

10. The marine propulsion unit according to any of claims 1 to 9, wherein
the air channel arrangement runs, at least in sections, along the longitudinal axis of the outer rotor, and/or wherein the air channel arrangement runs, at least in sections, around the circumference of the outer rotor.

11. The marine propulsion unit according to any of claims 1 to 10, wherein the air fan device is part of a motor cooling system.

12. The marine propulsion unit according to any of claims 1 to 11, wherein
the first position of the air channel arrangement is situated at a lower altitude than the second position of the air channel arrangement.

13. A marine vessel comprising a marine propulsion unit according to any of the preceding claims.

14. A method for cooling a slip-ring arrangement in a marine propulsion unit with a contra rotating motor having an inner rotor and an outer rotor, comprising:
Cooling a slip-ring assembly within a slip-ring housing by generating a negative pressure in an air channel arrangement connected by a first position to the slip-ring housing,
wherein a cooling airflow flows from the first position to a second position of the air channel arrangement; and
filtering the cooling airflow exiting the second position of the air channel arrangement by an outflow filter.

15. The method for cooling a slip-ring arrangement according to claim 14, further comprising:
Filtering the cooling air flow entering the slip-ring housing by an inflow filter.
